# EUROPEAN PATENT SPECIFICATION

(11) **EP 4 079 136 B1**
(45) Date of publication and mention of the grant of the patent: **21.08.2024**
(21) Application number: 21216331.5
(22) Date of filing: 21.12.2021
(51) Int. Cl.: A01D 34/416, A01D 34/63, A01D 34/64, A01D 34/67, A01D 34/68, A01D 34/74, A01D 34/78, A01D 34/81, A01D 67/00

(54) **ASSEMBLED GRASS CUTTING DEVICE**
ZUSAMMENGEBAUTE GRASSCHNEIDVORRICHTUNG
DISPOSITIF DE COUPE D'HERBE ASSEMBLÉ

(30) Priority: 19.04.2021 CN 202120790878 U
(43) Date of publication of application: 26.10.2022
(73) Proprietor: Techtronic Cordless GP, Anderson, SC 29621 (US)
(72) Inventor: LO, Lawrence Fung Pok, Kwai Chung (HK); CHUNG, Koon For, Kwai Chung (HK)
(74) Representative: Novagraaf Group

(56) References cited:
- CA-A1- 2 082 995
- GB-A- 2 281 840
- GB-A- 2 363 961
- US-A- 4 287 709
- US-A- 4 389 836
- US-A- 4 411 126
- US-A- 4 756 147

## Description

### Technical Field

The present invention relates to the field of electric tools, in particular to a hybrid grass cutting apparatus.

### Background Art

Handheld strimmers and walk-behind grass cutters are common gardening tools. A user can operate a handheld strimmer flexibly for lawn trimming or edging, but long periods of handheld operation are likely to cause fatigue in the arms and lower back. For this reason, users often use walk-behind grass cutters for trimming lawns with a large area. A walk-behind grass cutter is pushed by the user or provided with auxiliary traction by an engine, being pushed by means of a handle in order to cut grass, so the operation of a walk-behind grass cutter is not as flexible as that of a handheld strimmer. In general, a user will prepare both types of tool, i.e. a handheld strimmer and a walk-behind grass cutter, in order to meet the requirements of lawn trimming, but this will increase the purchase cost, as well as taking up more storage space.

The US 4 287 709 A discloses a wheeled platform with a centrally located aperture for receiving and supporting a grass trimming device, wherein the housing of the grass trimming device is received in the aperture, so that the cutting element of the trimming device extend beneath the platform, while the motor and housing extend above the platform.

### Summary of the Invention

In view of the above, an objective of the present invention is to provide a hybrid grass cutting apparatus, which can simultaneously meet the requirements of a handheld strimmer and a walk-behind grass cutter.

The invention is set out in the appended set of claims.

Thus, one aspect of the present invention is a hybrid grass cutting apparatus, comprising a strimmer assembly, the strimmer assembly comprising a cutting head assembly located at an end remote from a handle and connected via a connecting rod, the cutting head assembly comprising a cutting tool and a guard located close to the cutting tool; the hybrid grass cutting apparatus further comprises a grass cutter frame, the grass cutter frame having an opening which accommodates the guard and through which the cutting tool can pass; and an engagement feature is provided between the grass cutter frame and the guard, enabling a user to engage the strimmer assembly with the grass cutter frame or remove the strimmer assembly from the grass cutter frame without any need to use an additional tool.

In some embodiments, the engagement feature comprises a fixing feature, which prevents movement of the guard in at least one direction relative to the grass cutter frame.

In some embodiments, the fixing feature comprises a semi-open stop part located on the grass cutter frame, at least a partial flange of the guard being mounted in a semi-open space defined by the stop part, with preferably at least one and preferably two or more surfaces of the flange abutting a corresponding surface of the stop part.

In some embodiments, the engagement feature comprises a guide feature, the guide feature comprising a smooth guide surface formed on a path of contact points where the guard is engaged with the grass cutter frame.

According to the invention the engagement feature comprises an orientation feature which assists in mounting the strimmer assembly on the grass cutter frame in a unique orientation.

According to the invention the orientation feature comprises a protrusion located in one of the guard and the grass cutter frame, and a slot located in the other of the guard and the grass cutter frame; preferably, the orientation feature comprises more than one protrusion/slot combination.

In some embodiments, the engagement feature further comprises a latch feature, the latch feature comprising a snap-fit member arranged on the grass cutter frame; the snap-fit member abuts the guard in a locked position, and the snap-fit member is preferably arranged opposite the stop part.

In some embodiments, the latch feature further comprises an operating member, which is operated by the user and actuates the snap-fit member.

In some embodiments, the operating member actuates translation and/or pivoting of the snap-fit member, such that the snap-fit member disengages from the locked position, and the latch feature preferably further comprises a restoring member such as an elastic member, the restoring member generating a biasing force which causes the snap-fit member to enter the locked position.

In some embodiments, the operating member comprises a pivot shaft, an actuating part that is operated by the user and pivotable relative to the pivot shaft, and a following part that is connected to the pivot shaft and pivotable relative to the pivot shaft, the following part actuating the snap-fit member; the actuating part is preferably a pedal, and the pedal is preferably arranged at a side close to the user.

In some embodiments, the snap-fit member comprises preferably two or more fastening tongues, and the snap-fit member preferably further comprises a hole remote from the fastening tongue, the following part passing through the hole; more preferably, the hole allows relative sliding of the following part therein.

In some embodiments, the grass cutter frame comprises a carrier on which the snap-fit member and the operating member are positioned in such a way as to be capable of moving together, the fastening tongue preferably extending to the outside of the carrier.

In some embodiments, the handle of the strimmer assembly is pivotable relative to the cutting head assembly, and the connecting rod of the strimmer assembly is preferably telescopic.

In some embodiments, the grass cutter frame comprises a grass combing structure located on at least one side, the grass combing structure preferably defining a channel connecting an external space with the cutting tool.

In some embodiments, the grass cutter frame comprises a height adjustment mechanism.

### Brief Description of the Drawings

The above-described and additional characteristics of the present invention will become apparent from the following description of preferred embodiments provided only as examples and in conjunction with the drawings. Among the drawings,
Figures 1 and 2 show schematic drawings of the hybrid grass cutting apparatus according to an embodiment of the present invention, in an assembled state and a split state respectively.
Figure 3 shows a schematic drawing of the guard according to an embodiment of the present invention.
Figure 4 shows a schematic drawing of the grass cutter frame according to an embodiment of the present invention.
Figure 5 shows a schematic drawing of the guide surface according to an embodiment of the present invention.
Figures 6 - 8 show schematic drawings of the latch feature according to an embodiment of the present invention.
Figure 9 shows a schematic assembly drawing according to an embodiment of the present invention.

### Detailed Description of Embodiments

In the subsequent claims and the foregoing description of the present invention, unless otherwise required by the context for the expression or necessary implications, the term "comprise" or, for example, a variant (for example, "comprising" or "comprises") is used in an inclusive manner, i.e., to indicate the existence of the feature, which does not exclude the presence or addition of other features in the various embodiments of the present invention.

For example, "horizontal", "vertical", "transverse", "longitudinal", "above", "below" and similar terms used herein are for the purpose of describing the present invention in the orientation of the inventionembodiment in normal use, and are not intended to limit the present invention to any specific orientation.

It should be understood that if any publication of prior art is cited herein, such a reference does not constitute an admission that the publication forms part of common knowledge in the art in any country.

The hybrid grass cutting apparatus in the present invention is described below in conjunction with the drawings and embodiments. For simplicity of description, "down" means the direction toward the earth when the grass cutter frame is placed on the ground, and "up" is opposite to "down"; "front" means the direction from the rear wheels to the front wheels when the grass cutter frame is placed on the ground, and "rear" is opposite to "front"; "radially outer side" means a radially outward direction with a rotation shaft of the cutting head assembly as an axis, and "radially inner side" means a radially inward direction with the rotation shaft as an axis.

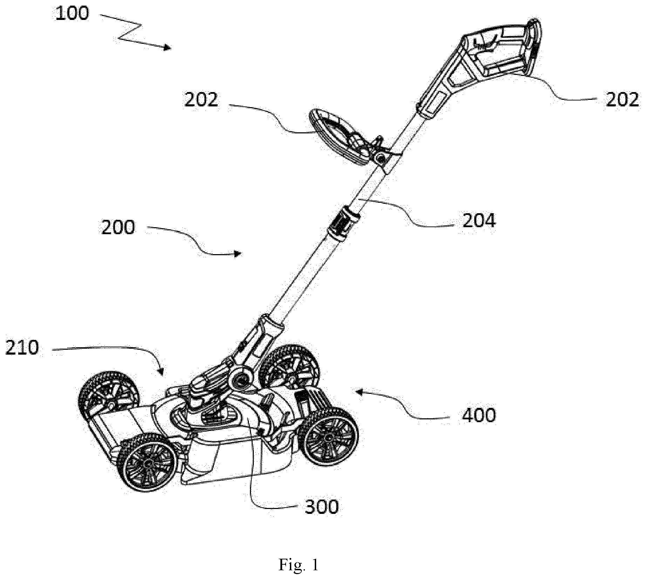

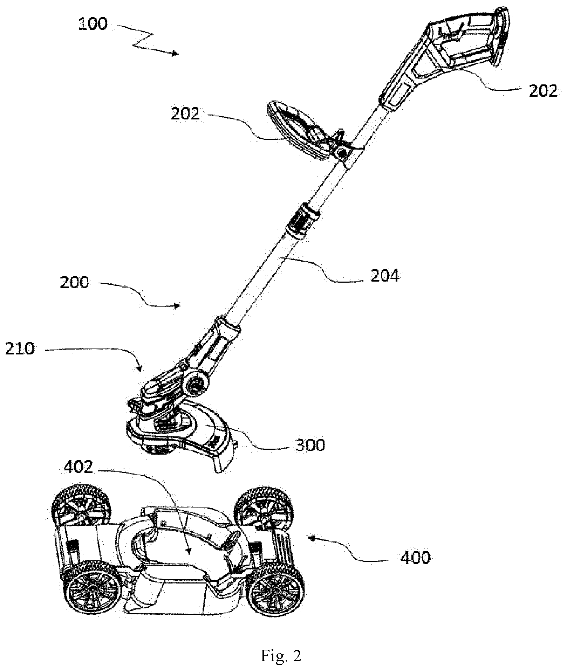

Figs. 1 and 2 show schematic drawings of the hybrid grass cutting apparatus 100 according to an embodiment of the present invention, in an assembled state and a split state respectively. The hybrid grass cutting apparatus 100 comprises a strimmer assembly 200 and a grass cutter frame 400. The strimmer assembly 200 comprises a handle 202 located at an end close to a user and a cutting head assembly 210 located at a far end; the handle 202 is pivotable relative to the cutting head assembly 210, so that the user can flexibly adjust the height of a handle grip part relative to the user, so as to adapt to users of different heights. A connecting rod 204 is connected between the handle 202 and the cutting head assembly 210; preferably, the connecting rod 204 is a telescopic rod of adjustable length. The handle 202 optionally comprises a power source and a control device. The cutting head assembly 210 comprises a cutting tool, and a guard 300 located close to the cutting tool. The cutting tool (not shown) may be a cutter or a strimmer line. The strimmer assembly 200 can be mounted on the grass cutter frame 400; the grass cutter frame 400 has an opening 402 which accommodates the guard 300 and through which the cutting tool can pass. An engagement feature is provided between the grass cutter frame 400 and the guard 300, enabling the user to engage the strimmer assembly 200 with the grass cutter frame 400 or remove the strimmer assembly 200 from the grass cutter frame 400 without any need to use an additional tool such as a screwdriver.

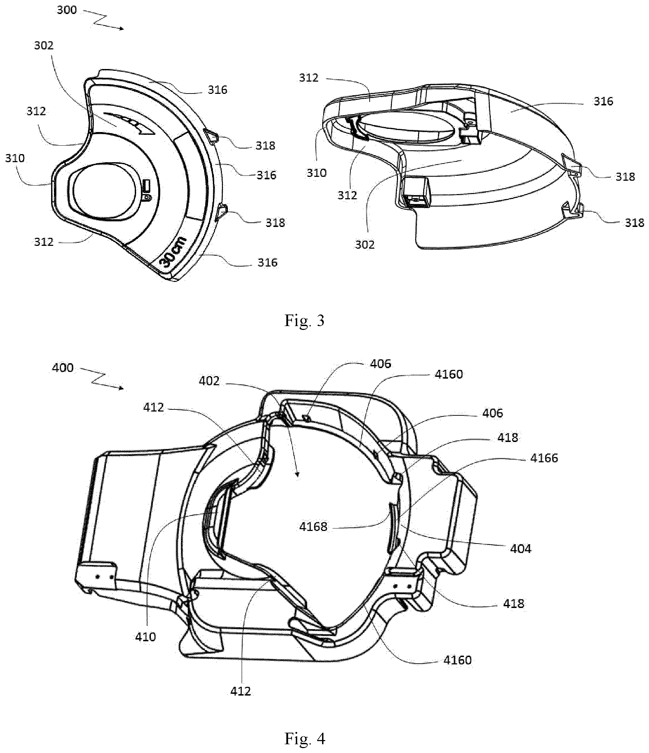

The engagement feature between the grass cutter frame 400 and the guard 300 comprises a fixing feature, which prevents the guard 300 from moving in at least one direction relative to the grass cutter frame 400. Referring to Figs. 3 and 4, Fig. 3 shows a schematic drawing of the guard 300 according to an embodiment of the present invention, with the cutting head assembly 210, etc. hidden. The guard 300 is formed as a main face 302 that is substantially fan-shaped; a flange extends downward from an edge of the main face 302, and comprises a front-end flange 310, two radius flanges 312 and a rear-part flange 316. The rear-part flange 316 extends downward by a greater length than the front-end flange 310 and the radius flanges 312. Two protrusions 318, which extend substantially rearward, are provided on the rear-part flange 316.

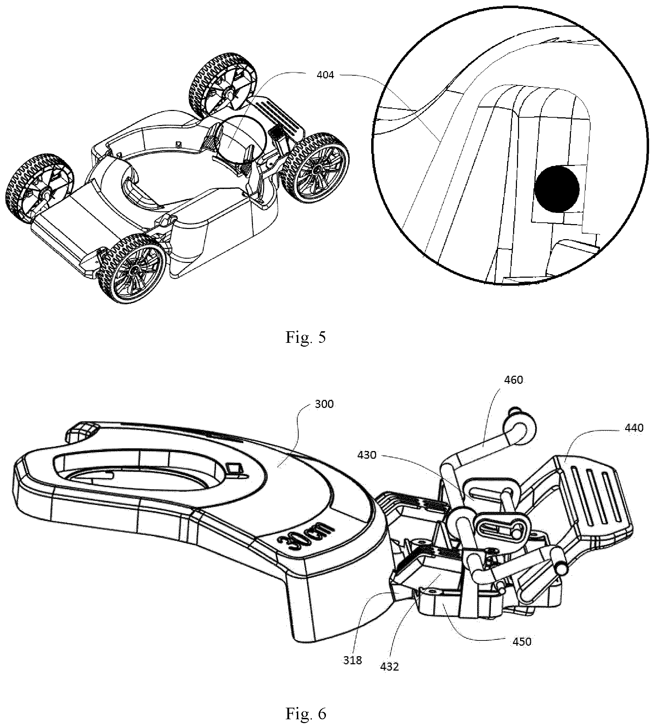

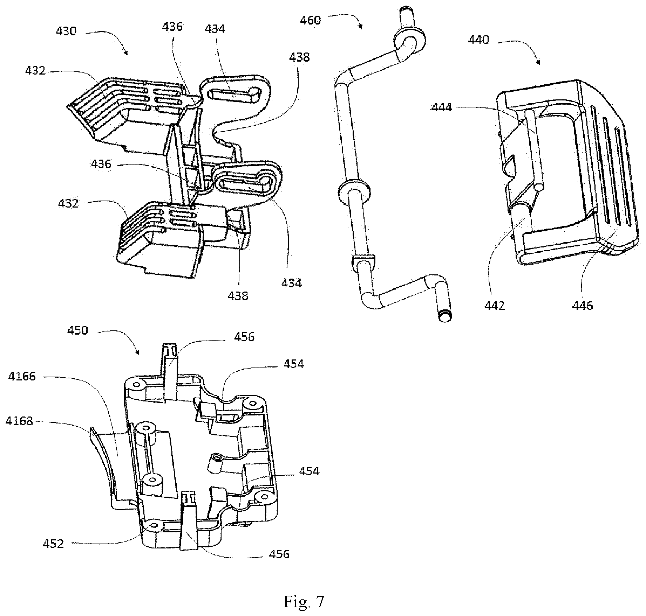

Fig. 4 shows a schematic drawing of the grass cutter frame 400 according to an embodiment of the present invention, with non-relevant components hidden. An edge of the substantially fan-shaped opening 402 is provided with a number of semi-open stop parts, including a U-shaped stop part 410 which extends upward and rearward from a front end of the opening 402. An inner peripheral face of the opening 402 has different degrees of downward extension, wherein a rear part extends downward by a greater length than the front end and two radii, in order to match the different lengths of downward extension of the flanges of the guard 300. A number of discontinuous stop parts, which extend radially inward, are distributed on a bottom end of the downward-extending inner peripheral face, and comprise two radius stop parts 412, two laterally-rearward stop parts 4160, and a directly-rearward stop part 4166 provided by a carrier 450 (Figs. 6 and 7) mounted on the grass cutter frame 400, wherein the directly-rearward stop part 4166 has an upward-extending edge 4168 at a radially inside edge, which forms a shallow groove together with the directly-rearward stop part 4166 and the directly-rearward inner peripheral face.

When the guard 300 is mounted on the grass cutter frame 400, the front-end flange 310 of the guard 300 is mounted in a semi-open space defined by the U-shaped stop part 410; a front end face and a top face of the front-end flange 310 abut corresponding surfaces of the U-shaped stop part 410, in order to prevent forward and upward movement of the guard 300 relative to the grass cutter frame 400. Bottom sides of the radius flanges 312 abut top sides of the radius stop parts 412 in order to prevent downward movement of the guard 300 relative to the grass cutter frame 400; radially outer sides of the radius flanges 312 abut corresponding inner peripheral faces of the opening 402 in order to prevent laterally forward movement of the guard 300 relative to the grass cutter frame 400. A bottom side of the rear-part flange 316 abuts top faces of the laterally-rearward stop parts 4160 and directly-rearward stop part 4166 in order to prevent downward movement of the guard 300 relative to the grass cutter frame 400; a radially outer side of the rear-part flange 316 abuts the corresponding inner peripheral face of the opening 402 in order to prevent radially outward movement of the guard 300 relative to the grass cutter frame 400; and a radially inner side of the rear-part flange 316 can abut the edge 4168 in order to prevent forward movement of the guard 300 relative to the grass cutter frame 400. In this way, the guard 300 can be fixed to the grass cutter frame 400. Preferably, a number of support feet 406 may be formed on the inner peripheral face of the opening 402, for the purpose of supporting radially outer sides of the flanges 310, 312 and 316, enhance the degree of abutment therebetween and reduce surface wear. Those skilled in the art will understand that the positions, number and form of the flanges and stop parts are not limited to those mentioned above.

The engagement feature between the grass cutter frame 400 and the guard 300 comprises an orientation feature. Referring to Figs. 3 and 4, a rear part of the grass cutter frame 400 is provided with two slots 418. In the process of mounting, the two protrusions 318 on the guard 300 will pass through the two slots 418 respectively in a downward direction, thus helping to mount the strimmer assembly 200 on the grass cutter frame 400 in a unique orientation. In some embodiments, the slots 418 may be provided on the guard 300, with the protrusions 318 being provided on the grass cutter frame 400. The slots 418 and protrusions 318 are provided as two sets in this embodiment, but may also be provided as one set or more than two sets.

In the process of frequently engaging and separating the guard 300 and the grass cutter frame 400, a situation might arise in which the guard 300 and the grass cutter frame 400 are not perfectly aligned, making engagement of the two operationally difficult. For this reason, the engagement feature between the grass cutter frame 400 and the guard 300 also comprises a guide feature. The guide feature comprises a smooth guide surface, which should be formed on a path of contact points where the guard 300 is engaged with the grass cutter frame 400. Referring to Fig. 5, Fig. 5 shows a schematic drawing of a guide surface according to an embodiment of the present invention, with an enlarged drawing of a guide surface 404 therein at the right side. The guide surface 404 is located on the directly-rearward inner peripheral face of the grass cutter frame 400, and can prevent the two protrusions 318 or the flange part therebetween (part of the rear-part flange 316) from becoming jammed at the inside of the opening 402, causing deformation or wear or hindering installation, when the guard 300 is mounted on the grass cutter frame 400. The guide feature may also comprise an inner peripheral face of the slot 418; this inner peripheral face is a smooth guide surface that is sunk downward, and can prevent the protrusion 318 from becoming jammed in the slot 418, causing deformation or wear, when the guard 300 is mounted on the grass cutter frame 400. A greater number of guide surfaces may be provided on the path of contact points where the guard 300 is mounted on the grass cutter frame 400.

The engagement feature between the grass cutter frame 400 and the guard 300 may further comprise a latch feature, which is capable of locking the guard 300 on the grass cutter frame 400. The latch feature comprises a snap-fit member 430 mounted on the grass cutter frame 400, an operating member 440 operated by the user for the purpose of actuating the snap-fit member 430, and the carrier 450 which is mounted on the grass cutter frame 400 and carries the snap-fit member 430 and operating member 440. Figs. 6 - 8 show schematic drawings of the latch feature according to an embodiment of the present invention; the grass cutter frame 400 and other components have been hidden in Figs. 6 and 7. In some embodiments, the latch feature may also be realized in another form, and the carrier 450 may be provided integrally with the grass cutter frame 400.

Referring to Fig. 6, the snap-fit member 430 abuts the guard 300 in a locked position; preferably, the snap-fit member 430 is arranged opposite the U-shaped stop part 410 (Fig. 4). Referring to Figs. 6 and 7, the snap-fit member 430 comprises fastening tongues 432, holes 434 remote from the fastening tongue 432, a front engagement slot 436 and a rear engagement slot 438. Preferably, two or more fastening tongues 432 are provided. As can be seen from Fig. 6, bottom faces of the two fastening tongues 432 abut top faces of the two protrusions 318 of the guard 300 respectively. The operating member 440 comprises a pivot shaft 442, a following part 444 that is connected to the pivot shaft 442 and pivotable relative to the pivot shaft 442, and an actuating part 446 that is operated by the user and pivotable relative to the pivot shaft 442. Preferably, the actuating part 446 is a pedal close to the user side, but it may also take another form operable by the user. When the user presses the pedal down with his or her foot, the actuating part 446 pivots in a clockwise direction relative to the pivot shaft 442, and due to the rigid structure, the following part 444 will also pivot in a clockwise direction relative to the pivot shaft 442. Two ends at the top of the following part 444 pass through the two holes 434 of the snap-fit member 430 respectively, and are able to slide in the holes 434 in a relative fashion. Furthermore, a front side of the pivot shaft 442 abuts the rear engagement slot 438 of the snap-fit member 430. Thus, the following part 444 will pull the snap-fit member 430 to translate and/or pivot rearward, such that the snap-fit member 430 disengages from the locked position. Those skilled in the art will understand that the above manner of realizing actuation of the snap-fit member 430 by the operating member 440 is merely exemplary, and is not a limitation on the present invention.

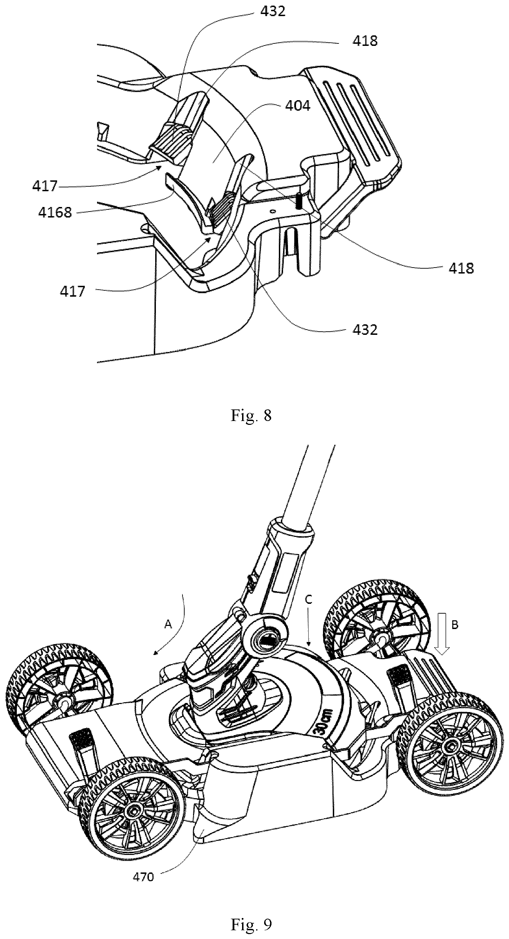

The snap-fit member 430 and operating member 440 are positioned on the carrier 450 in such a way as to be capable of moving together. Referring to Figs. 7 and 8, the carrier 450 forms a base, an upper surface of which can accommodate the bottom of the snap-fit member 430. The fastening tongues 432 extend to the outside of the carrier 450, and pass through through-holes 417 located below the slots 418 of the grass cutter frame 400. An engagement slot 454 on the carrier 450 supports the pivot shaft 442 of the operating member 440 from below. The carrier 450 comprises a number of mounting parts 452, which can be fixed to the grass cutter frame 400 with screws. The grass cutter frame 400 has a rear shaft 460 connected between two rear wheels, and the front engagement slot 436 of the snap-fit member 430 can abut the rear shaft 460. Support posts 456 of the carrier 450 can support the rear shaft 460. An upper part of the rear shaft 460 abuts a lower-edge engagement slot (not shown) of the grass cutter frame 400. Thus, with the help of the carrier 450, the components involved in the latch feature are mounted on the grass cutter frame 400 in such a way as to be capable of moving together.

The latch feature further comprises one or more restoring member (not shown), e.g. elastic member; the restoring member generates a biasing force that causes the snap-fit member 430 to enter the locked position. For example, the elastic member may be a compression spring arranged between the snap-fit member 430 and the carrier 450, or a torsion spring arranged close to the pivot shaft 442.

Figure 9 shows a schematic assembly drawing according to an embodiment of the present invention. As shown in Fig. 9, when mounting the guard 300 on the grass cutter frame 400, the user can first mount the front-end flange 310 of the guard 300 in the semi-open space of the U-shaped stop part 410 of the grass cutter frame 400 (as shown by arrow A), and then press down the actuating part 446 with his or her foot (as indicated by arrow B), so that the fastening tongues 432 translate and/or pivot rearward through the through-holes 417 so as to move away from the guard 300. The two protrusions 318 of the guard 300 are aligned with the two slots 418 of the grass cutter frame 400 respectively, and a rear part of the guard 300 is moved downward (as shown by arrow C), all the way to the lowest position that the guard 300 is able to reach. As the rear part moves downward, the protrusions 318 move downward along the smooth guide surface, and will not become jammed on the grass cutter frame 400. The user can then release actuating part 446, and under the action of the biasing force of the restoring member (e.g. spring), the snap-fit member 430 will be biased to the locked position (shown in Fig. 6); the bottom of the fastening tongue 432 will tightly abut the top of the protrusion 318 of the guard 300 under the action of the biasing force of the restoring member, thereby preventing disengagement of the strimmer assembly 200 from the grass cutter frame 400 during operation in the assembled state.

When removing the strimmer assembly 200 from the grass cutter frame 400, the user first presses down the actuating part 446 with his or her foot (as shown by arrow B), and the fastening tongues 432 translate and/or pivot rearward through the through-holes 417 so as to move away from the guard 300; at this point, the rear part of the guard 300 can be lifted up (in the opposite direction to arrow C), and the front-end flange 310 can be taken out of the semi-open space of the U-shaped stop part 410 (in the opposite direction to arrow A). Once the rear part of the guard 300 has been lifted up, the user can release the actuating part 446 at any time, and under the action of the biasing force of the restoring member, the snap-fit member 430 will automatically be biased to the locked position.

In order to further prevent wear to the protrusions 318 on the guard 300 in the process of engaging and disengaging the guard 300 and the grass cutter frame 400, a partial surface of the top of the fastening tongue 432 (provided with multiple strip-like grooves running in a front-rear direction) can be configured as a smooth guide surface; this partial surface is a partial surface on a path of contact points which might arise when the fastening tongue 432 is engaged with the protrusion 318. Alternatively, some of the strip-like grooves that were originally located on the top may be arranged on the bottom of the fastening tongue 432, in order to enhance the toughness of the fastening tongue 423.

As shown in Fig. 9, at least one side of the grass cutter frame 400 is provided with a grass combing structure 470, capable of defining a channel connecting an external space with the cutting tool. The channel may comprise one or more straight or curved channel. In some embodiments, the grass combing structure 470 may be located at a front end at both sides of the grass cutter frame 400, and formed as a sharp corner that protrudes forward. Preferably, a sharper corner may also be added at a rounded end of the grass combing structure 470 as shown in figure 9. Preferably, the additional sharper corner projects forward by 2 mm. In addition, the grass cutter frame 400 may also comprise a height adjustment mechanism.

While the present invention has been illustrated and described in detail above in conjunction with the drawings, the description should be regarded as illustrative rather than restrictive; it should be understood that only exemplary embodiments are shown and described, and that they do not limit the present invention in any way. The scope of protection is defined by the appended claims.

## Claims

1. A hybrid grass cutting apparatus (100), comprising a strimmer assembly (200), the strimmer assembly (200) comprising a cutting head assembly (210) located at an end remote from a handle (202) and connected via a connecting rod (204), the cutting head assembly (210) comprising a cutting tool and a guard (300) located close to the cutting tool, wherein
the hybrid grass cutting apparatus (100) further comprises a grass cutter frame (400), the grass cutter frame (400) having an opening (402) which accommodates the guard (300) and through which the cutting tool can pass; and
an engagement feature is provided between the grass cutter frame (400) and the guard (300), enabling a user to engage the strimmer assembly (200) with the grass cutter frame (400) or remove the strimmer assembly (200) from the grass cutter frame (400) without any need to use an additional tool;
**characterized in that** the engagement feature further comprises an orientation feature which assists in mounting the strimmer assembly (200) on the grass cutter frame (400) in a unique orientation, wherein the orientation feature comprises a protrusion (318) located in one of the guard (300) and the grass cutter frame (400), and a slot (418) located in the other of the guard (300) and the grass cutter frame (400).

2. The hybrid grass cutting apparatus (100) as claimed in claim 1, wherein the engagement feature comprises a fixing feature, which prevents movement of the guard (300) in at least one direction relative to the grass cutter frame (400).

3. The hybrid grass cutting apparatus (100) as claimed in claim 2, wherein the fixing feature comprises a semi-open stop part located on the grass cutter frame (400), at least a partial flange of the guard (300) being mounted in a semi-open space defined by the stop part, with preferably at least one and preferably two or more surfaces of the flange abutting a corresponding surface of the stop part.

4. The hybrid grass cutting apparatus (100) as claimed in claim 1, wherein the engagement feature comprises a guide feature, the guide feature comprising a smooth guide surface formed on a path of contact points where the guard (300) is engaged with the grass cutter frame (400).

5. The hybrid grass cutting apparatus (100) as claimed in claim 1, wherein the orientation feature comprises more than one protrusion (318) / slot (418) combination.

6. The hybrid grass cutting apparatus (100) as claimed in claim 1, wherein the engagement feature further comprises a latch feature, the latch feature comprising a snap-fit member arranged on the grass cutter frame (400); the snap-fit member abuts the guard (300) in a locked position, and the snap-fit member is preferably arranged opposite the stop part.

7. The hybrid grass cutting apparatus (100) as claimed in claim 6, wherein the latch feature further comprises an operating member, which is operated by the user and actuates the snap-fit member.

8. The hybrid grass cutting apparatus (100) as claimed in claim 7, wherein the operating member actuates translation and/or pivoting of the snap-fit member, such that the snap-fit member disengages from the locked position, and the latch feature preferably further comprises a restoring member such as an elastic member, the restoring member generating a biasing force which causes the snap-fit member to enter the locked position.

9. The hybrid grass cutting apparatus (100) as claimed in claim 8, wherein the operating member comprises a pivot shaft, an actuating part that is operated by the user and pivotable relative to the pivot shaft, and a following part that is connected to the pivot shaft and pivotable relative to the pivot shaft, the following part actuating the snap-fit member; the actuating part is preferably a pedal, and the pedal is preferably arranged at a side close to the user.

10. The hybrid grass cutting apparatus (100) as claimed in claim 9, wherein the snap-fit member comprises preferably two or more fastening tongues, and the snap-fit member preferably further comprises a hole remote from the fastening tongue, the following part passing through the hole; more preferably, the hole allows relative sliding of the following part therein.

11. The hybrid grass cutting apparatus (100) as claimed in claim 10, wherein the grass cutter frame (400) comprises a carrier on which the snap-fit member and the operating member are positioned in such a way as to be capable of moving together, the fastening tongue preferably extending to the outside of the carrier.

12. The hybrid grass cutting apparatus (100) as claimed in claim 1, wherein the handle (202) of the strimmer assembly (200) is pivotable relative to the cutting head assembly (210), and the connecting rod (204) of the strimmer assembly (200) is preferably telescopic.

13. The hybrid grass cutting apparatus (100) as claimed in claim 1, wherein the grass cutter frame (400) comprises a grass combing structure located on at least one side, the grass combing structure preferably defining a channel connecting an external space with the cutting tool.

14. The hybrid grass cutting apparatus (100) as claimed in claim 1, wherein the grass cutter frame (400) comprises a height adj ustment mechanism.

## Patentansprüche

1. Hybride Grasschneidevorrichtung (100), umfassend eine Trimmeranordnung (200), die Trimmeranordnung (200) umfassend eine Schneidkopfanordnung (210), die sich an einem von einem Griff (202) entfernten Ende befindet und über eine Verbindungsstange (204) verbunden ist, die Schneidkopfanordnung (210) umfassend ein Schneidwerkzeug und einen Schutz (300), der sich in der Nähe des Schneidwerkzeugs befindet, wobei
die hybride Grasschneidevorrichtung (100) ferner einen Grasschneiderrahmen (400) umfasst, wobei der Grasschneiderrahmen (400) eine Öffnung (402) aufweist, die den Schutz (300) aufnimmt und die das Schneidwerkzeug passieren kann; und
ein Eingriffsmerkmal zwischen dem Grasschneiderrahmen (400) und dem Schutz (300) bereitgestellt ist, das es einem Benutzer ermöglicht, die Trimmeranordnung (200) mit dem Grasschneiderrahmen (400) in Eingriff zu bringen oder die Trimmeranordnung (200) von dem Grasschneiderrahmen (400) zu entfernen, ohne dass es nötig ist, ein zusätzliches Werkzeug zu verwenden;
**dadurch gekennzeichnet, dass** das Eingriffsmerkmal ferner ein Ausrichtungsmerkmal umfasst, das dabei hilft, die Trimmeranordnung (200) in einer eindeutigen Ausrichtung an dem Grasschneiderrahmen (400) zu montieren, wobei das Ausrichtungsmerkmal einen Vorsprung (318), der sich in einem von dem Schutz (300) und dem Grasschneiderrahmen (400) befindet, und einen Schlitz (418) umfasst, der sich in dem anderen von dem Schutz (300) und dem Grasschneiderrahmen (400) befindet.

2. Hybride Grasschneidevorrichtung (100) nach Anspruch 1, wobei das Eingriffsmerkmal ein Fixiermerkmal umfasst, das eine Bewegung des Schutzes (300) in mindestens eine Richtung relativ zu dem Grasschneiderrahmen (400) verhindert.

3. Hybride Grasschneidevorrichtung (100) nach Anspruch 2, wobei das Fixiermerkmal ein halboffenes Anschlagteil umfasst, das sich an dem Grasschneiderrahmen (400) befindet, wobei mindestens ein Teilflansch des Schutzes (300) in einem halboffenen Raum montiert ist, der durch das Anschlagteil definiert ist, wobei vorzugsweise mindestens eine und vorzugsweise zwei oder mehr Oberflächen des Flansches an einer entsprechenden Oberfläche des Anschlagteils anliegen.

4. Hybride Grasschneidevorrichtung (100) nach Anspruch 1, wobei das Eingriffsmerkmal ein Führungsmerkmal umfasst, das Führungsmerkmal umfassend eine glatte Führungsoberfläche, die auf einem Pfad von Kontaktpunkten ausgebildet ist, wo der Schutz (300) mit dem Grasschneiderrahmen (400) in Eingriff steht.

5. Hybride Grasschneidevorrichtung (100) nach Anspruch 1, wobei das Ausrichtungsmerkmal mehr als eine Kombination aus Vorsprung (318) / Schlitz (418) umfasst.

6. Hybride Grasschneidevorrichtung (100) nach Anspruch 1, wobei das Eingriffsmerkmal ferner ein Verriegelungsmerkmal umfasst, das Verriegelungsmerkmal umfassend ein Schnappverschlusselement, das an dem Grasschneiderrahmen (400) eingerichtet ist; wobei das Schnappverschlusselement in einer Sperrposition an dem Schutz (300) anliegt und das Schnappverschlusselement vorzugsweise gegenüber dem Anschlagteil eingerichtet ist.

7. Hybride Grasschneidevorrichtung (100) nach Anspruch 6, wobei das Verriegelungsmerkmal ferner ein Bedienelement umfasst, das durch den Benutzer bedient wird und das Schnappverschlusselement betätigt.

8. Hybride Grasschneidevorrichtung (100) nach Anspruch 7, wobei das Bedienelement eine Translation und/oder ein Schwenken des Schnappverschlusselements derart betätigt, dass sich das Schnappverschlusselement aus der Sperrposition löst, und das Verriegelungsmerkmal vorzugsweise ferner ein Rückstellelement, wie ein elastisches Element, umfasst, wobei das Rückstellelement eine Vorspannkraft erzeugt, die bewirkt, dass das Schnappverschlusselement in die Sperrposition gelangt.

9. Hybride Grasschneidevorrichtung (100) nach Anspruch 8, wobei das Bedienelement eine Schwenkachse, ein Betätigungsteil, das durch den Benutzer bedient wird und relativ zu der Schwenkachse schwenkbar ist, und ein Folgeteil, das mit der Schwenkachse verbunden ist und relativ zu der Schwenkachse schwenkbar ist, umfasst, wobei das Folgeteil das Schnappverschlusselement betätigt; das Betätigungsteil vorzugsweise ein Pedal ist und das Pedal vorzugsweise an einer Seite in der Nähe des Benutzers eingerichtet ist.

10. Hybride Grasschneidevorrichtung (100) nach Anspruch 9, wobei das Schnappverschlusselement vorzugsweise zwei oder mehr Befestigungszungen umfasst und das Schnappverschlusselement vorzugsweise ferner ein von der Befestigungszunge entferntes Loch umfasst, wobei das Folgeteil das Loch passiert; mehr bevorzugt das Loch ein relatives Gleiten des Folgeteils darin ermöglicht.

11. Hybride Grasschneidevorrichtung (100) nach Anspruch 10, wobei der Grasschneiderrahmen (400) einen Träger aufweist, auf dem das Schnappverschlusselement und das Bedienelement gemeinsam so positioniert sind, um in der Lage zu sein, sich gemeinsam zu bewegen, wobei die Befestigungszunge vorzugsweise bis zu der Außenseite des Trägers reicht.

12. Hybride Grasschneidevorrichtung (100) nach Anspruch 1, wobei der Griff (202) der Trimmeranordnung (200) relativ zu der Schneidkopfanordnung (210) schwenkbar ist und die Verbindungsstange (204) der Trimmeranordnung (200) vorzugsweise teleskopisch ist.

13. Hybride Grasschneidevorrichtung (100) nach Anspruch 1, wobei der Grasschneiderrahmen (400) eine Graskämmstruktur aufweist, die sich auf mindestens einer Seite befindet, wobei die Graskämmstruktur vorzugsweise einen Kanal definiert, der einen externen Raum mit dem Schneidwerkzeug verbindet.

14. Hybride Grasschneidevorrichtung (100) nach Anspruch 1, wobei der Grasschneiderrahmen (400) einen Höhenverstellmechanismus umfasst.

## Revendications

1. Appareil hybride de coupe d'herbe (100), comprenant un ensemble débroussailleuse (200), l'ensemble débroussailleuse (200) comprenant un ensemble tête de coupe (210) localisé au niveau d'une extrémité distante d'une poignée (202) et relié par une tige de liaison (204), l'ensemble tête de coupe (210) comprenant un outil de coupe et un cache de protection (300) localisé près de l'outil de coupe, dans lequel
l'appareil hybride de coupe d'herbe (100) comprend en outre un châssis de coupe-herbe (400), le châssis de coupe-herbe (400) ayant une ouverture (402) qui reçoit le cache de protection (300) et à travers laquelle l'outil de coupe peut passer ; et
une fonctionnalité de mise en prise est fournie entre le châssis de coupe-herbe (400) et le cache de protection (300), permettant à un utilisateur de mettre en prise l'ensemble débroussailleuse (200) avec le châssis de coupe-herbe (400) ou de retirer l'ensemble débroussailleuse (200) du châssis de coupe-herbe (400) sans un besoin quelconque d'utiliser un outil supplémentaire ;
**caractérisé en ce que** la fonctionnalité de mise en prise comprend en outre une fonctionnalité d'orientation qui aide à monter l'ensemble débroussailleuse (200) sur le châssis de coupe-herbe (400) selon une orientation unique, dans lequel la fonctionnalité d'orientation comprend une partie saillante (318) localisée dans l'un parmi le cache de protection (300) et le châssis de coupe-herbe (400), et une encoche (418) localisée dans l'autre parmi le cache de protection (300) et le châssis de coupe-herbe (400).

2. Appareil hybride de coupe d'herbe (100) selon la revendication 1, dans lequel la fonctionnalité de mise en prise comprend une fonctionnalité de fixation, qui empêche un mouvement du cache de protection (300) dans au moins une direction par rapport au châssis de coupe-herbe (400).

3. Appareil hybride de coupe d'herbe (100) selon la revendication 2, dans lequel la fonctionnalité de fixation comprend une partie d'arrêt semi-ouverte localisée sur le châssis de coupe-herbe (400), au moins un rebord partiel du cache de protection (300) étant monté dans un espace semi-ouvert défini par la partie d'arrêt, avec de préférence au moins une et de préférence deux surfaces ou plus du rebord venant en butée contre une surface correspondante de la partie d'arrêt.

4. Appareil hybride de coupe d'herbe (100) selon la revendication 1, dans lequel la fonctionnalité de mise en prise comprend une fonctionnalité de guidage, la fonctionnalité de guidage comprenant une surface de guidage lisse formée sur une trajectoire de points de contact où le cache de protection (300) est en prise avec le châssis de coupe-herbe (400).

5. Appareil hybride de coupe d'herbe (100) selon la revendication 1, dans lequel la fonctionnalité d'orientation comprend plus d'une combinaison partie saillante (318)/encoche (418).

6. Appareil hybride de coupe d'herbe (100) selon la revendication 1, dans lequel la fonctionnalité de mise en prise comprend en outre une fonctionnalité de verrou, la fonctionnalité de verrou comprenant un élément d'encliquetage agencé sur le châssis de coupe-herbe (400) ; l'élément d'encliquetage vient en butée contre le cache de protection (300) dans une position verrouillée, et l'élément d'encliquetage est de préférence agencé opposé à la partie d'arrêt.

7. Appareil hybride de coupe d'herbe (100) selon la revendication 6, dans lequel la fonctionnalité de verrou comprend en outre un élément de commande, qui est commandé par l'utilisateur et actionne l'élément d'encliquetage.

8. Appareil hybride de coupe d'herbe (100) selon la revendication 7, dans lequel l'élément de commande actionne une translation et/ou un pivotement de l'élément d'encliquetage, de telle sorte que l'élément d'encliquetage se libère de la position verrouillée, et la fonctionnalité de verrou comprend de préférence en outre un élément de restauration tel qu'un élément élastique, l'élément de restauration générant une force de sollicitation qui amène l'élément d'encliquetage à entrer dans la position verrouillée.

9. Appareil hybride de coupe d'herbe (100) selon la revendication 8, dans lequel l'élément de commande comprend un arbre de pivot, une partie d'actionnement qui est commandée par l'utilisateur et pouvant pivoter par rapport à l'arbre de pivot, et une partie suiveuse qui est reliée à l'arbre de pivot et peut pivoter par rapport à l'arbre de pivot, la partie suiveuse actionnant l'élément d'encliquetage ; la partie d'actionnement est de préférence une pédale, et la pédale est de préférence agencée au niveau d'un côté près de l'utilisateur.

10. Appareil hybride de coupe d'herbe (100) selon la revendication 9, dans lequel l'élément d'encliquetage comprend de préférence deux languettes d'attache ou plus, et l'élément d'encliquetage comprend de préférence en outre un trou distant de la languette d'attache, la partie suiveuse passant à travers le trou ; plus préférablement, le trou permet un coulissement relatif de la partie suiveuse à l'intérieur de celui-ci.

11. Appareil hybride de coupe d'herbe (100) selon la revendication 10, dans lequel le châssis de coupe-herbe (400) comprend un support sur lequel l'élément d'encliquetage et l'élément de commande sont positionnés d'une manière telle à être capables de se déplacer ensemble, la languette d'attache s'étendant de préférence vers l'extérieur du support.

12. Appareil hybride de coupe d'herbe (100) selon la revendication 1, dans lequel la poignée (202) de l'ensemble débroussailleuse (200) peut pivoter par rapport à l'ensemble tête de coupe (210), et la tige de liaison (204) de l'ensemble débroussailleuse (200) est de préférence télescopique.

13. Appareil hybride de coupe d'herbe (100) selon la revendication 1, dans lequel le châssis de coupe-herbe (400) comprend une structure de peignage d'herbe localisée sur au moins un côté, la structure de peignage d'herbe définissant de préférence un canal reliant un espace externe à l'outil de coupe.

14. Appareil hybride de coupe d'herbe (100) selon la revendication 1, dans lequel le châssis de coupe-herbe (400) comprend un mécanisme d'ajustement de hauteur.
